# EUROPEAN PATENT APPLICATION

(11) **EP 4 583 491 A1**
(43) Date of publication of application: **09.07.2025**
(21) Application number: 23935896.3
(22) Date of filing: 24.11.2023
(51) Int. Cl.: H04L 67/125

(54) **SNOW MELTING CONTROL SYSTEM FOR RAILROAD SWITCHES**

(30) Priority: 09.11.2023 CN 202323018672 U
(71) Applicant: CRSC RESEARCH & DESIGN INSTITUTE GROUP CO., LTD., Fengtai District Beijing 100070 (CN)
(72) Inventor: LIU, Jingwei, Beijing 100070 (CN); ZHAO, Qiang, Beijing 100070 (CN); YANG, Jin, Beijing 100070 (CN); LI, Zhongming, Beijing 100070 (CN); ZHANG, Xiaoyu, Beijing 100070 (CN); LI, Wei, Beijing 100070 (CN); ZHAO, Danxu, Beijing 100070 (CN); LI, Hui, Beijing 100070 (CN); SUI, Zheng, Beijing 100070 (CN); CHEN, Junzhou, Beijing 100070 (CN); CHEN, Guangyuan, Beijing 100070 (CN)
(74) Representative: Haseltine Lake Kempner LLP
(86) International application number: PCT/CN2023/133812
(87) International publication number: WO 2025/097498

(57) **Abstract**

An embodiment of the present application discloses a snow melting control system of a switch, including a data information acquisition subsystem, a data transmission subsystem, a data processing cloud subsystem and an application subsystem. By setting the data transmission subsystem, the snow melting parameters are sent to the data processing cloud subsystem for storage and processing through the 5G networking device in the data transmission subsystem, and then the snow melting parameters stored in the data processing cloud subsystem and the processing result of the snow melting parameters are obtained and displayed by using each application device in the application subsystem. Based on this, technicians can remotely analyze the faults of the snow melting device and monitoring device in the station through the application device, and find out the method to eliminate the faults without going to the station for processing.

## Description

### CROSS-REFERENCE TO RELATED APPLICATION

The present application claims priority to Chinese Patent Application No. 202323018672.9 filed on November 09, 2023, the disclosure of which is hereby incorporated by reference in its entirety as part of the present application.

### TECHNICAL FIELD

An embodiment of the present application relates to the technical field of safety monitoring of a turnout, and more particularly, to a snow melting control system of a turnout.

### BACKGROUND

In a railroad system, especially in the north, it is usually equipped with a snow melting system of a turnout. In the case of snow or ice, the snow or ice on the turnout is melted by the snow melting system of the turnout, so as to avoid the situation that the turnout cannot be tightly attached due to snow or ice.

At present, the snow melting system of the turnout is usually set in each station and controlled by the control center of each station. However, when the system reports an error or has a simple fault, technicians need to arrive at the station to check the snow melting system of the turnout in the station, which cannot achieve the purpose of remote analysis and check of the system, and consumes manpower, material resources and financial resources.

### SUMMARY

An embodiment of the present application provides a snow melting control system of a turnout, so as to realize the purpose of remotely analyzing and checking the relevant parameters of the snow melting system of the turnout.

An embodiment of the present application provides a snow melting control system of a turnout, the system comprises a data information acquisition subsystem, a data transmission subsystem, a data processing cloud subsystem and an application subsystem;

the data information acquisition subsystem comprises a snow melting device and a monitoring device of each station, wherein the monitoring device is connected with the snow melting device and is configured to control a working state of the snow melting device and monitor snow melting parameters of the snow melting device;

the data transmission subsystem comprises a 5G networking device and a corresponding control terminal of each station, wherein the control terminal of any station is connected with the corresponding monitoring device and is configured to receive snow melting parameters sent by the monitoring device and send a control instruction for changing the working state of the snow melting device to the monitoring device;

the data processing cloud subsystem is connected with the 5G networking device and is configured to receive, store and process the snow melting parameters sent by the control terminal through the 5G networking device;

the application subsystem comprises a plurality of application devices, and each application device and the data processing cloud subsystem are configured to obtain and display the snow melting parameters stored by the data processing cloud subsystem and the processing result of the snow melting parameters according to an interactive operation of a user.

According to the technical solution of the embodiment of the present application, by setting the data transmission subsystem, the snow melting parameters are sent to the data processing cloud subsystem for storage and processing through the 5G networking device in the data transmission subsystem, and then the snow melting parameters stored in the data processing cloud subsystem and the processing result of the snow melting parameters are obtained and displayed by using each application device in the application subsystem. Based on this, technicians can remotely analyze the faults of the snow melting device and monitoring device in the station through the application device, and find out the method to eliminate the faults without going to the station for processing.

### BRIEF DESCRIPTION OF DRAWINGS

Fig. 1 is a schematic diagram illustrating an architecture of a snow melting control system of a turnout provided by an embodiment of the present application;
Fig. 2 is a structural schematic diagram of a snow melting device provided by an embodiment of the present application;
Fig. 3 is a schematic diagram of a clamp of a snow melting device provided by an embodiment of the present application.

### DETAILED DESCRIPTION

The present application will now be described in further detail with reference to the accompanying drawings and the embodiment. It is to be understood that the specific embodiment described herein is merely illustrative of the present application and is not intended to limit the present application. It should also be noted that, for convenience of description, only some, but not all, structures pertinent to the present application are shown in the drawings.

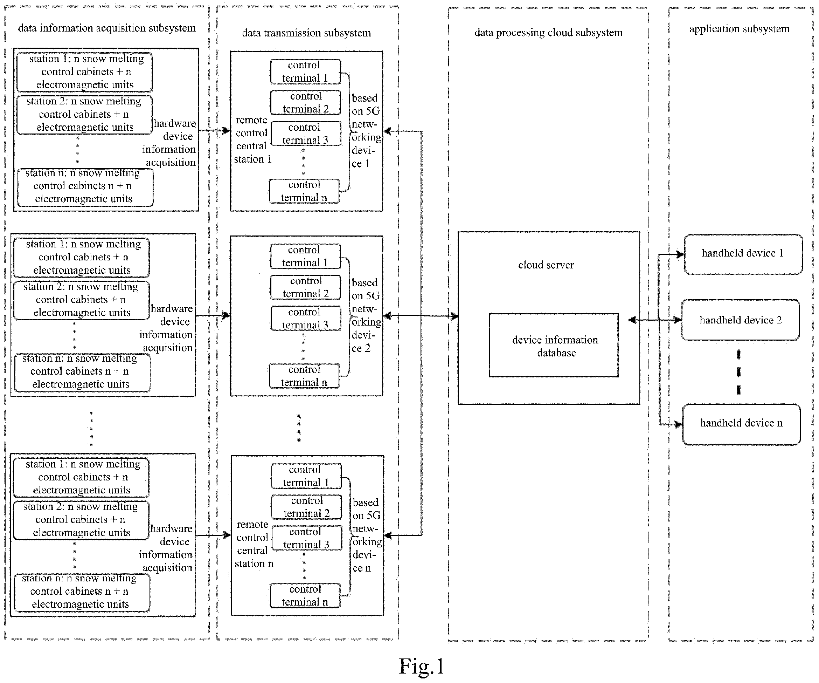

Fig. 1 is a schematic diagram illustrating an architecture of a snow melting control system of a turnout provided by an embodiment of the present application, which specifically comprises: a data information acquisition subsystem, a data transmission subsystem, a data processing cloud subsystem and an application subsystem;

the data information acquisition subsystem comprises a snow melting device and a monitoring device of each station, wherein the monitoring device is connected with the snow melting device and is configured to control a working state of the snow melting device and monitor snow melting parameters of the snow melting device;

the data transmission subsystem comprises a 5G networking device and a corresponding control terminal of each station, wherein the control terminal of any station is connected with the corresponding monitoring device and is configured to receive snow melting parameters sent by the monitoring device and send a control instruction for changing the working state of the snow melting device to the monitoring device;

the data processing cloud subsystem is connected with the 5G networking device and is configured to receive, store and process the snow melting parameters sent by the control terminal through the 5G networking device;

the application subsystem comprises a plurality of application devices, and each application device and the data processing cloud subsystem are configured to obtain and display the snow melting parameters stored by the data processing cloud subsystem and the processing result of the snow melting parameters according to an interactive operation of a user.

Wherein the snow melting device is disposed at the turnout, and the snow melting device mainly comprises an electromagnetic induction unit, a high-frequency inversion unit and a control unit. The electromagnetic induction unit is respectively connected with the high-frequency inversion unit and the control unit. The control unit is configured to cut off or close a working power supply of the snow melting device according to the control instruction.

**In** particular, the control unit comprises a high-voltage protection unit for realizing overvoltage protection. **In** addition, the snow melting device further comprises a shell and a fixture. The high-frequency inversion unit and the control unit are arranged inside the shell, and the electromagnetic induction unit is fixed on a target inner surface of the shell. The fixture is fixedly arranged outside the target inner surface, and is configured to clamp the snow melting device on the turnout, so that an outer surface of the shell corresponding to the target inner surface tightly attaches to a surface of the turnout.

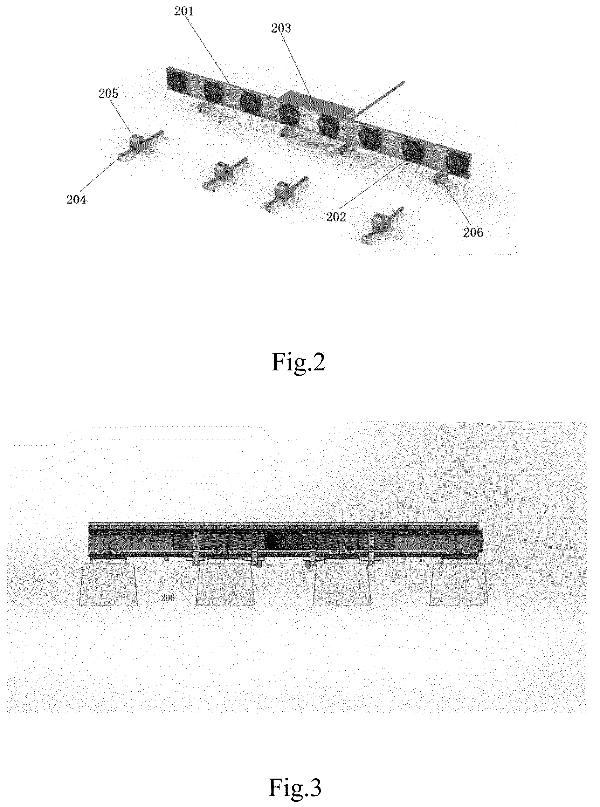

In a specific example, referring to Fig. 2, which is a structural schematic diagram of a snow melting device provided by an embodiment of the present application. As shown in Fig. 2, a shell 201 of the snow melting device is elongated and a plurality of coils, which are electromagnetic induction units 202, are embedded therein, and in the example shown in Fig. 2, 8 coils are embedded in the shell.

The induction coil is fixed on a bobbin. Considering the characteristics of electromagnetic heating principle, the bobbin should avoid using a metal material, but in order to make it have certain strength, nylon is selected as the bobbin material, which has good electrical insulation, high impact strength and certain temperature resistance.

The shell is also provided with a convex part 203, and the high-frequency inversion unit and the control unit are arranged in the convex part. With the fixture in Fig. 2, the shell is clamped at the waist of the rail outside the basic rail in the bifurcation area. The fixture includes a bolt 204, a first clamping part 205 and a second clamping part 206. The first clamping part and the second clamping part cooperate to attach the shell to the waist of the rail, and the first clamping part and the second clamping part are fastened by the bolt. After fastening, the first clamping part is clamped on the track, and the second clamping part is clamped on the shell.

Refer to Fig. 3 for a specific clamping schematic diagram, which is a schematic diagram of a clamp of a snow melting device provided by an embodiment of the present application.

As shown in Fig. 3, the shell is clamped against the waist of the rail by using four sets of fixtures.

In the snow melting device, under the condition of receiving the control instruction of turning on, the control unit closes the working power supply of the snow melting device, the current passes through the high-frequency inversion unit and is inverted into an appropriate current. The inverted current flows through the electromagnetic induction unit, so that the attached turnout generates electromagnetic induction to generate heat, and the snow or ice covered on the turnout is melted through heat transfer.

Under the condition of receiving the control instruction of closing, the control unit cuts off the working power supply of the snow melting device to stop it from working.

Electromagnetic induction heating is used to directly heat the rail through the eddy current formed on the surface of the rail by electromagnetic induction to realize the snow melting of the turnout, which has the performance of not destroying the structure of the rail, and at the same time, it does not affect the switch rail conversion when installed outside the basic rail, which solves the problems of low heat conduction efficiency and high energy consumption of the existing electric heating elements. Due to the high efficiency of converting electric energy into heat energy by using electromagnetic induction snow melting system of a turnout, it has the technical advantages of low energy consumption, high efficiency and energy saving, and also reduces the demand for power capacity, which is beneficial to be applied to the general-speed railway market.

In the above process, the snow melting parameters that the monitoring device needs to acquire include a first power supply voltage, a first current and a first frequency of the snow melting device.

Further, the monitoring device includes a snow melting control cabinet; wherein the snow melting control cabinet is provided with a modular controller, a voltage/current detection unit, a manual/automatic conversion unit, a temperature detection unit, a power supply unit, a lightning protection unit, a communication unit and a heating loop;

the controller, the voltage/current detection unit, the manual/automatic conversion unit, the temperature detection unit, the power supply unit, the lightning protection unit, the communication unit and the heating loop communicate through a preset bus communication mode.

It should be noted that the snow melting control cabinet is designed with an intelligent modular structure, each module has its own data processing capability, and data interaction is carried out through remote 232, CAN bus and other communication modes.

In addition, the heating loop comprises a circuit breaker, a leakage switch, and an AC contactor. It has the functions of short circuit, overload, leakage protection, and the like.

The above monitoring device, the corresponding snow melting parameters that need to be acquired further comprise: a second power supply voltage, a second current, a second frequency, a cabinet door state, an inside-cabinet environmental parameter of the snow melting control cabinet, a rail temperature, the working state of the snow melting device, a first device state of the circuit breaker, a second device state of the AC contactor.

The snow melting control cabinet is used to control the start-stop (i.e. sending the control instruction), information collection, operation state monitoring and parameter setting of the snow melting device on site, realizing the start-up and shut-down operations of the turnout heating, and feeding back all kinds of information to the control terminal of the station. It can also accept and execute the command sent by the control terminal of the station to start and close the snow melting device.

The snow melting parameters acquired during electromagnetic induction heating and the snow melting control cabinet are fed back to the control terminal of the station through a serial port. That is to say, the control terminal of any station and the corresponding monitoring device are connected through a serial port.

In addition, a remote central workstation can also be set up, and the control terminal of the station can feed back the above snow melting parameters to the remote central workstation through the network cable. Of course, the control instruction of the remote central workstation can also be transmitted to the snow melting control cabinet through this network cable, so as to realize the start-stop control of the snow melting device by the remote central workstation.

The remote central workstation is connected with the control terminal in communication. The remote central workstation is composed of an industrial computer, a monitor, a network switch and other devices, and it is mainly used to monitor the snow melting device in all stations of a certain line or an unattended block post. It is generally set in local dispatching or other designated places, connected with the control terminals of other stations or block posts through an information channel of not less than 2M, and communicated by TCP/IP, so as to realize remote control of the snow melting device in all stations of a certain line or an unattended block post.

In addition, the control terminal is mainly composed of an industrial computer, a display, a network switch (when networking is needed), a communication module, an emergency heating control panel and other devices to realize centralized control of snow melting device in this station. Communication with centralized control layer is realized through network, and communication with execution layer is realized through a serial port.

In addition, in this embodiment, the control terminal can also communicate with the weather station, which can be set at this station or this block post. The weather station device is composed of a snowfall sensor, a temperature and humidity sensor, an electrical distribution cabinet, an upright post and so on, which is mainly used to monitor meteorological information and send it to the control terminal.

It should be noted that the data transmission subsystem is equipped with a 5G networking device, which is connected with the control terminal and can send the snow melting parameters received by the control terminal to the data processing cloud subsystem in the form of 5G communication.

Based on the 5G technology, the 5th generation mobile communication technology is a new generation broadband mobile communication technology with the characteristics of high speed, low delay and large connection. In the 5G environment, the communication delay is reduced from 100ms+ in the traditional network to within 10ms at the fastest. In such an infrastructure environment, the 5G internet of things (IOT) terminal can cut into the real-time control field, which is of great help to the snow melting system of the turnout that requires real-time monitoring and remote control of the device operation state.

In addition, the data processing cloud subsystem is a cloud server with a device information database. The data storage software of the cloud server can be programmed in C# language and run in the cloud server operating system, and the database can be Microsoft SQL Server 2012.

The main storage technology is a distributed storage, which integrates the storage resources of multiple remote central workstations into a large storage space through a distributed file system. Then, through a distributed storage, the massive data will be distributed and analyzed, and the effective and valuable data will be extracted and sent to the application layer to provide more convenient services for remote after-sales.

It should be noted that the data processing cloud subsystem is preset with a variety of data analysis algorithms to analyze the snow melting parameters, so as to obtain the analysis result, which can be used to characterize whether the snow melting device is out of order.

Of course, the aforementioned data analysis algorithm can be imported by technicians in advance according to the requirement, and the specific algorithm content is not repeated here.

In addition, the application subsystem can include a handheld device and a desktop device. Among them, the handheld device can be a mobile terminal device such as a mobile phone, a tablet and so on, and the desktop device can include a terminal device that is not easy to move, such as a computer.

Whether it is a handheld device or a desktop device, it can be equipped with a corresponding application program, which can intuitively display the results of data processing, analysis and summary for a user and facilitate the after-sales use of a user.

**In** this embodiment, by setting the data transmission subsystem, the snow melting parameters are sent to the data processing cloud subsystem for storage and processing through the 5G networking device in the data transmission subsystem, and then the snow melting parameters stored in the data processing cloud subsystem and the processing result of the snow melting parameters are obtained and displayed by using each application device in the application subsystem. Based on this, technicians can remotely analyze the faults of the snow melting device and monitoring device in the station through the application device, and find out the method to eliminate the faults without going to the station for processing.

**In** addition, in order to ensure the stable operation of the system, this embodiment adopts redundant configuration and other measures for the key hardware devices. The key hardware can include, but is not limited to, the control terminal, the 5G networking device and so on. **In** addition, a hard disk involved in the control terminal can be configured by a solid-state hard disk and so on to ensure the normal operation of the system. And the electromagnetic heating unit can be designed in series, and then the connection mode of series and parallel can be adjusted according to the actual rated power of each snow melting device to ensure the normal heating function of the system and ensure the operation of the train.

Note that the above is only the preferred embodiment of this application and the applied technical principle. Those skilled in the art will understand that the application is not limited to the specific embodiment herein, and various obvious changes, readjustments and substitutions can be made to those skilled in the art without departing from the protection scope of the application. Therefore, although the present application has been described in detail through the above embodiment, the present application is not limited to the above embodiment, but may include more other equivalent embodiments without departing from the concept of the present application, and the scope of the present application is determined by the scope of the appended claims.

## Claims

1. A snow melting control system of a turnout, **characterized in that** the system comprises a data information acquisition subsystem, a data transmission subsystem, a data processing cloud subsystem and an application subsystem;
the data information acquisition subsystem comprises a snow melting device and a monitoring device of each station, wherein the monitoring device is connected with the snow melting device and is configured to control a working state of the snow melting device and monitor snow melting parameters of the snow melting device;
the data transmission subsystem comprises a 5G networking device and a corresponding control terminal of each station, wherein the control terminal of any station is connected with the corresponding monitoring device and is configured to receive snow melting parameters sent by the monitoring device and send a control instruction for changing the working state of the snow melting device to the monitoring device;
the data processing cloud subsystem is connected with the 5G networking device and is configured to receive, store and process the snow melting parameters sent by the control terminal through the 5G networking device;
the application subsystem comprises a plurality of application devices, and each application device and the data processing cloud subsystem are configured to obtain and display the snow melting parameters stored by the data processing cloud subsystem and the processing result of the snow melting parameters according to an interactive operation of a user.

2. The system according to claim 1, **characterized in that** the snow melting device comprises an electromagnetic induction unit, a high-frequency inversion unit and a control unit;
the electromagnetic induction unit is respectively connected with the high-frequency inversion unit and the control unit;
the control unit is configured to cut off or close a working power supply of the snow melting device according to the control instruction.

3. The system according to claim 2, **characterized in that** the control unit comprises a high-voltage protection unit for realizing overvoltage protection.

4. The system according to claim 2, **characterized in that** the snow melting device further comprises a shell and a fixture;
the high-frequency inversion unit and the control unit are arranged inside the shell, and the electromagnetic induction unit is fixed on a target inner surface of the shell;
the fixture is fixedly arranged outside the target inner surface, and is configured to clamp the snow melting device on the turnout, so that an outer surface of the shell corresponding to the target inner surface tightly attaches to a surface of the turnout.

5. The system according to any one of claims 2-4, **characterized in that** the snow melting parameters comprise a first power supply voltage, a first current and a first frequency of the snow melting device.

6. The system according to claim 1, **characterized in that** the monitoring device comprises a snow melting control cabinet;
the snow melting control cabinet is provided with a modular controller, a voltage/current detection unit, a manual/automatic conversion unit, a temperature detection unit, a power supply unit, a lightning protection unit, a communication unit and a heating loop;
the controller, the voltage/current detection unit, the manual/automatic conversion unit, the temperature detection unit, the power supply unit, the lightning protection unit, the communication unit and the heating loop communicate through a preset bus communication mode.

7. The system according to claim 6, **characterized in that** the heating loop comprises a circuit breaker, a leakage switch and an AC contactor.

8. The system according to claim 7, **characterized in that** the snow melting parameters further comprise a second power supply voltage, a second current, a second frequency, a cabinet door state and an inside-cabinet environment parameter of the snow melting control cabinet, a rail temperature, the working state of the snow melting device, a first device state of the circuit breaker and a second device state of the AC contactor.

9. The system according to claim 1, **characterized in that** the control terminal of the any station and the corresponding monitoring device are connected through a serial port.

10. The system according to claim 1, **characterized in that** the application device comprises a handheld device and a desktop device.
